# EUROPEAN PATENT SPECIFICATION

(11) **EP 2 046 848 B1**
(45) Date of publication and mention of the grant of the patent: **26.11.2014**
(21) Application number: 07796654.7
(22) Date of filing: 02.07.2007
(51) Int. Cl.: C08F 220/06, C08F 220/12, C08F 220/28, C09D 133/10, C09D 133/12

(54) **RANDOM COPOLYMERS OF METHACRYLATES AND ACRYLATES**
STATISTISCH AUFGEBAUTE COPOLYMERE VON METHACRYLATEN UND ACRYLATEN
COPOLYMÈRES ALÉATOIRES DE MÉTHACRYLATES ET D'ACRYLATES

(30) Priority: 06.07.2006 US 483304
(43) Date of publication of application: 15.04.2009
(73) Proprietor: Abbott Cardiovascular Systems Inc., Santa Clara, CA 95054-2807 (US)
(72) Inventor: GLAUSER, Thierry, Redwood City, California 94062 (US)
(74) Representative: ZBM Patents - Zea, Barlocci & Markvardsen
(86) International application number: PCT/US2007/015367
(87) International publication number: WO 2008/005439

(56) References cited:
- GB-A- 1 278 572
- GB-A- 2 226 036
- US-A- 3 894 980
- US-A- 4 954 587
- US-A- 5 100 582
- US-A- 6 133 391
- US-A1- 2004 059 408

## Description

### FIELD OF THE INVENTION

This invention generally relates to an implantable medical device as described in the claims.

### DESCRIPTION OF THE BACKGROUND

Blood vessel occlusions are commonly treated by mechanically enhancing blood flow in the affected vessels, such as by employing a stent. Stents are used not only for mechanical intervention but also as vehicles for providing biological therapy. To effect a controlled delivery of an active agent in stent medication, the stent can be coated with a biocompatible polymeric coating. The biocompatible polymeric coating can function either as a permeable layer or a carrier to allow a controlled delivery of the agent.

Although stents work well mechanically, the chronic issues of restenosis and, to a lesser extent, stent thrombosis remain. Pharmacological therapy in the form of a drug delivery stent appears to be a feasible means to tackle these issues. Polymeric coatings placed onto the stent serve to act both as the drug reservoir and to control the release of the drug. One of the commercially available polymer-coated products is a stent manufactured by Boston Scientific. For example, U.S. Patent Nos. 5,869,127; 6,099,563; 6,179,817; and 6,197,051, assigned to Boston Scientific Corporation, describe various compositions for coating medical devices. These compositions provide to stents described therein an enhanced biocompatibility and may optionally include a bioactive agent. U.S. Patent No. 6,231,590 to Scimed Life Systems, Inc., describes a coating composition, which includes a bioactive agent, a collagenous material, or a collagenous coating optionally containing or coated with other bioactive agents.

The nature of the coating polymers plays an important role in defining the surface properties of a coating. For example, coating integrity depends largely on the nature of the polymer forming the coating. For example, a very low T_{g}, amorphous coating material can have unacceptable rheological behavior upon mechanical perturbation such as crimping, balloon expansion, etc. On the other hand, a high T_{g} or highly crystalline coating material introduces brittle fractures in the high strain areas of the stent pattern.

Therefore, there is a need for polymeric materials that can be tailored to meet need of a coating on a medical device.

The polymer and methods of making the polymer disclosed herein address the above-described problems.

### SUMMARY OF THE INVENTION

Random copolymers of methacrylates or acrylates have been described. These random copolymers are capable of imparting good physical and mechanical properties (e.g., coating integrity) to a coating on a medical device. In addition, these random copolymers include hydrophobic and hydrophilic units in the backbone and can provide controlled release of a hydrophilic bioactive agent, a hydrophobic bioactive agent, or both from a coating. Therefore, these copolymers can be used to form a coating on an implantable device, which can optionally include a bioactive agent.

In some embodiments, the hydrophobic bioactive agent can be any of paclitaxel, docetaxel, estradiol, 17-beta-estradiol, nitric oxide donors, super oxide dismutases, super oxide dismutase mimics, 4-amino-2,2,6,6-tetramethylpiperidine-1-oxyl (4-amino-TEMPO), tacrolimus, dexamethasone, rapamycin, rapamycin derivatives, 40-*O*-(2-hydroxy)ethyl-rapamycin (everolimus), 40-*O*-(3-hydroxy)propyl-rapamycin, 40-*O*-[2-(2-hydroxy)ethoxy]ethyl-rapamycin, and 40-*O*-tetrazole-rapamycin, 40-epi-(Nl-tetrazolyl)-rapamycin (ABT-578), γ-hiridun, clobetasol, mometasone, pimecrolimus, imatinib mesylate, or midostaurin, or prodrugs, co-drugs, or combinations of these. In some embodiments, the hydrophilic bioactive agent can be a peptide (e.g., RGD, cRGD or mimetics thereof) or a drug carrying a charge.

In some embodiments, the random copolymer can allow a hydrophilic peptide to dissolve in an organic solvent, which is important for forming a coating including the peptide by spray-coating.

A medical device having a coating that includes the random copolymer having the features described herein can be used to treat, prevent, or ameliorate a medical condition such as atherosclerosis, thrombosis, restenosis, hemorrhage, vascular dissection or perforation, vascular aneurysm, vulnerable plaque, chronic total occlusion, claudication, anastomotic proliferation (for vein and artificial grafts), bile duct obstruction, urethra obstruction, tumor obstruction, and combinations thereof.

### DETAILED DESCRIPTION

Random copolymers of methacrylates or acrylates have been described. These random copolymers are capable of imparting good physical and mechanical properties (e.g., coating integrity) to a coating on a medical device. In addition, these random copolymers include hydrophobic and hydrophilic units in the backbone and can provide controlled release of a hydrophilic bioactive agent, a hydrophobic bioactive agent, or both from a coating. Therefore, these copolymers can be used to form a coating on an implantable device, which can optionally include a bioactive agent.

In some embodiments, the hydrophobic bioactive agent can be any of paclitaxel, docetaxel, estradiol, 17-beta-estradiol, nitric oxide donors, super oxide dismutases, super oxide dismutase mimics, 4-amino-2,2,6,6-tetramethylpiperidine-1-oxyl (4-amino-TEMPO), tacrolimus, dexamethasone, rapamycin, rapamycin derivatives, 40-*O*-(2-hydroxy)ethyl-rapamycin (everolimus), 40-*O*-(3-hydroxy)propyl-rapamycin, 40-*O*-[2-(2-hydroxy)ethoxy]ethyl-rapamycin, and 40-*O*-tetrazole-rapamycin, 40-epi-(N1-tetrazolyl)-rapamycin (ABT-578), γ-hiridun, clobetasol, mometasone, pimecrolimus, imatinib mesylate, or midostaurin, or prodrugs, co-drugs, or combinations of these. In some embodiments, the hydrophilic bioactive agent can be a peptide (e.g., RGD, cRGD or mimetics thereof) or a drug carrying a charge.

In some embodiments, the random copolymer can allow a hydrophilic peptide to dissolve in an organic solvent, which is important for forming a coating including a peptide by spray-coating.

A medical device having a coating that includes the random copolymer having the features described herein can be used to treat, prevent, or ameliorate a medical condition such as atherosclerosis, thrombosis, restenosis, hemorrhage, vascular dissection or perforation, vascular aneurysm, vulnerable plaque, chronic total occlusion, claudication, anastomotic proliferation (for vein and artificial grafts), bile duct obstruction, urethra obstruction, tumor obstruction, and combinations thereof.

In some embodiments, the random copolymer includes at least two of (a) units derived from alkyl methacrylate or acrylate, (b) units derived from an alkoxyalkyl acrylate or methacrylate, and (c) units derived from a hydrophilic acrylate or methacrylate. The alkyl acrylate or methacrylate can include any C1-C20 straight or branch-chained alkyl, cyclic alkyl, or arylalkyl (e.g., phenylalkyl) groups. The alkoxyalkyl acrylate or methacrylate can include an alkoxy group having C1-C20 straight or branch-chained alkyl, cyclic alkyl, or phenyl group. The hydrophilic acrylate or methacrylate can include any straight or branch-chained alkyl, cyclic alkyl, or aryl (e.g., phenyl) group bearing one or more hydrophilic groups such as hydroxyl, carboxylic, sulfonate, amine, or thiol groups, groups that bear a charge such as choline or phosphoryl choline, or groups that bear zwitterions.

In some embodiments, the random copolymer can have a formula with a weight ratio of monomers as follows: about 0 - 0.7 the alkyl acrylate or methacrylate, about 0 - 0.9 the alkoxyalkyl acrylate or methacrylate, and about 0 - 0.2 the hydrophilic acrylate or methacrylate having a number average molecular weight (Mₙ) in the range between about 80 kDa to about 250 kDa. In some embodiments, the random copolymer includes units of a weight ratio of about 0 - 0.7 methyl methacrylate (MMA), about 0 - 0.9 methoxyethyl methacrylate (MOEMA), and about 0 - 0.2 hydroxyethyl methacrylate (HEMA) having a Mₙ in the range between about 80 kDa to about 250 kDa.

In some embodiments, the random copolymer can have units derived from a hydrophobic or hydrophilic vinyl monomer having a general formula of (R₁)(R₂)C=CH₂ where R₁ and R₂ are non-hydrogen groups. In one embodiment, the hydrophobic monomer can be any methacrylate or fluorinated methacrylate monomers. Alternatively, the hydrophobic monomers can be acrylate, or fluorinated acrylate monomers. As another alternative, the hydrophobic monomers can be 2-phenylacrylate or 2-phenylacrylamide. The ester group in these hydrophobic monomers can have a short chain alkyl group ranging from C1 to C6. Examples of fluorinated methacrylate monomer are 1H, 1H,2H,2H-heptadecafluorodecyl methacrylate, 1H,1H,3H-hexafluorobutyl methacrylate. The hydrophilic monomers can be any vinyl monomer having one or more hydrophilic groups, methacrylamide or acrylamide. Some examples of the hydrophilic groups are pyrrolidone group(s), carboxylic acid group(s), sulfone group(s), sulfonic acid group(s), amino group(s), alkoxy group(s), amide group(s), ester group(s), acetate group(s), poly(ethylene glycol) group(s), poly(propylene glycol) group(s), poly(tetramethylene glycol) group( s), poly(alkylene oxide) group(s), hydroxyl group(s), or a substituent that bears a charge and/or any of pyrrolidone group(s), carboxylic acid group(s), sulfone group(s), sulfonic acid group(s), amino group(s), alkoxy group(s), amide group(s), ester group(s), acetate group(s), poly(ethylene glycol) group(s), poly(propylene glycol) group(s), poly(tetramethylene glycol) group(s), poly(alkylene oxide) group(s), and hydroxyl group(s). Some exemplary hydrophilic monomers are vinyl pyrrolidone, hydroxyethyl methacrylate, hydroxypropyl methacrylate, methyl vinyl ether, alkyl vinyl ether, vinyl alcohol, methacrylic acid, acrylic acid, acrylamide, N-alkyl acrylamide, hydroxypropylmethacrylamide, vinyl acetate, 2-sulfoethyl methacrylate, 3-sulfopropyl acrylate, 3-sulfopropyl methacrylate,, and PEG-methacrylate. Some exemplary substituents bearing a charge can be, for example, choline, phosphoryl choline, 2-aminoethyl methacrylate hydrochloride, N-(3-aminopropyl)methacrylamide hydrochloride, 2-N-morpholinoethyl methacrylate, vinylbenzoic acid, vinyl sulfonic acid, and styrene sulfonates.

The random copolymer described herein can be synthesized using methods known in the art (see, for example, D. Braun, et al., Polymer Synthesis: Theory and Practice. Fundamentals, Methods, Experiments. 3rd Ed., Springer, 2001; Hans R. Kricheldorf, Handbook of Polymer Synthesis, Marcel Dekker Inc., 1992; G. Odian, Principles of Polymerization, 3rd ed. John Wiley & Sons, 1991). For example, free radical methods can be used to make the polymer (see, for example, D. Braun, et al., Polymer Synthesis: Theory and Practice. Fundamentals, Methods, Experiments. 3rd Ed., Springer, 2001; Hans R. Kricheldorf, Handbook of Polymer Synthesis, Marcel Dekker Inc., 1992).

### Biocompatible polymer

The random copolymer described above can be used to form coating on an implantable device, for example, a stent. The random copolymer can be used alone or in combination with another polymer. Such other polymers can be home or copolymers (random or block copolymers) and can be biodegradable (both bioerodable or bioabsorbable) or nondegradable. Representative biocompatible polymers include, but are not limited to, poly(ester amide), polyhydroxyalkanoates (PHA), poly(3-hydroxyalkanoates) such as poly(3-hydroxypropanoate), poly(3-hydroxybutyrate), poly(3-hydroxyvalerate), poly(3-hydroxyhexanoate), poly(3-hydroxyheptanoate) and poly(3-hydroxyoctanoate), poly(4-hydroxyalkanaote) such as poly(4-hydroxybutyrate), poly(4-hydroxyvalerate), poly(4-hydroxyhexanote), poly(4-hydroxyheptanoate), poly(4-hydroxyoctanoate) and copolymers including any of the 3-hydroxyalkanoate or 4-hydroxyalkanoate monomers described herein or blends thereof, poly(D,L-lactide), poly(L-lactide), polyglycolide, poly(D,L-lactide-co-glycolide), po)y(L-lactide-co-glycolide), polycaprolactone, poly(lactide-co-caprolactone), poly(glycolide-co-caprolactone), poly(dioxanone), poly(ortho esters), poly(trimethylene carbonate), poly(anhydrides), poly(tyrosine carbonates) and derivatives thereof, poly(tyrosine ester) and derivatives thereof, poly(imino carbonates), poly(glycolic acid-co-trimethylene carbonate), polyphosphoester, polyphosphoester urethane, poly(amino acids), polycyanoacrylates, poly(iminocarbonate), polyurethanes, polyphosphazenes, silicones, polyesters, polyolefins, polyisobutylene and ethylene-alphaolefin copolymers, acrylic polymers and copolymers, vinyl halide polymers and copolymers, such as polyvinyl chloride, polyvinyl ethers, such as polyvinyl methyl ether, polyvinylidene halides, such as polyvinylidene chloride, polyacrylonitrile, polyvinyl ketones, polyvinyl aromatics, such as polystyrene, polyvinyl esters, such as polyvinyl acetate, copolymers of vinyl monomers with each other and olefins, such as ethylene-methyl methacrylate copolymers, acrylonitrile-styrene copolymers, ABS resins, and ethylene-vinyl acetate copolymers, polyamides, such as Nylon 66 and polycaprolactam, alkyd resins, polycarbonates, polyoxymethylenes, polyimides, polyethers, poly(glyceryl sebacate), poly(propylene fumarate), poly(n-butyl methacrylate), poly(sec-butyl methacrylate), poly(isobutyl methacrylate), poly(tert-butyl methacrylate), poly(n-propyl methacrylate), poly(isopropyl methacrylate), poly(ethyl methacrylate), poly(methyl methacrylate), epoxy resins, polyurethanes, rayon, rayon-triacetate, cellulose acetate, cellulose butyrate, cellulose acetate butyrate, cellophane, cellulose nitrate, cellulose propionate, cellulose ethers, carboxymethyl cellulose, polyethers such as poly(ethylene glycol) (PEG), copoly(ether-esters) (e.g. PEO/PLA), polyalkylene oxides such as poly(ethylene oxide), poly(propylene oxide), poly(ether ester), polyalkylene oxalates, polyphosphazenes, phosphoryl choline, choline, poly(aspirin), polymers and co-polymers of hydroxyl bearing monomers such as HEMA, hydroxypropyl methacrylate (HPMA), hydroxypropylmethacrylamide, PEG acrylate (PEGA), PEG methacrylate, 2-methacryloyloxyethylphosphorylcholine (MPC) and n-vinyl pyrrolidone (VP), carboxylic acid bearing monomers such as methacrylic acid (MA), acrylic acid (AA), alkoxymethacrylate, alkoxyacrylate, and 3-trimethylsilylpropyl methacrylate (TMSPMA), poly(styrene-isoprene-styrene)-PEG (SIS-PEG), polystyrene-PEG, polyisobutylene-PEG, polycaprolactone-PEG (PCL-PEG), PLA-PEG, poly(methyl methacrylate)-PEG (PMMA-PEG), polydimethylsiloxane-co-PEG (PDMS-PEG), poly(vinylidene fluoride)-PEG (PVDF-PEG), PLURONIC™ surfactants (polypropylene oxide-co-polyethylene glycol), poly(tetramethylene glycol), hydroxy functional poly(vinyl pyrrolidone), biomolecules such as collagen, chitosan, alginate, fibrin, fibrinogen, cellulose, starch, collagen, dextran, dextrin, fragments and derivatives of hyaluronic acid, heparin, fragments and derivatives of heparin, glycosamino glycan (GAG), GAG derivatives, polysaccharide, elastin, chitosan, alginate, or combinations thereof. In some embodiments, the substrate coating described herein can exclude any one of the aforementioned polymers.

As used herein, the terms poly(D,L-lactide), poly(L-lactide), poly(D,L-lactide-co-glycolide), and poly(L-lactide-co-glycolide) can be used interchangeably with the terms poly(D,L-lactic acid), poly(L-lactic acid), poly(D,L-lactic acid-co-glycolic acid), or poly(L-lactic acid-co-glycolic acid), respectively.

In some embodiments, the substrate coating or basecoat preferably includes a fluoropolymer such as a Solef™ polymer (e.g., PVDF-HFP).

In some embodiments, the substrate coating can further include a biobeneficial material. The biobeneficial material can be polymeric or non-polymeric. The biobeneficial material is preferably substantially non-toxic, non-antigenic and non-immunogenic. A biobeneficial material is one that enhances the biocompatibility of a device by being non-fouling, hemocompatible, actively non-thrombogenic, or anti-inflammatory, all without depending on the release of a pharmaceutically active agent.

Representative biobeneficial materials include, but are not limited to, polyethers such as poly(ethylene glycol), copoly(ether-esters) (e.g. PEO/PLA), polyalkylene oxides such as poly(ethylene oxide), poly(propylene oxide), poly(ether ester), polyalkylene oxalates, polyphosphazenes, phosphoryl choline, choline, poly(aspirin), polymers and co-polymers of hydroxyl bearing monomers such as hydroxyethyl methacrylate (HEMA), hydroxypropyl methacrylate (HPMA), hydroxypropylmethacrylamide, poly (ethylene glycol) acrylate (PEGA), PEG methacrylate, 2-methacryloyloxyethylphosphorylcholine (MPC) and *n*-vinyl pyrrolidone (VP), carboxylic acid bearing monomers such as methacrylic acid (MA), acrylic acid (AA), alkoxymethacrylate, alkoxyacrylate, and 3-trimethylsilylpropyl methacrylate (TMSPMA), poly(styrene-isoprene-styrene)-PEG (SIS-PEG), polystyrene-PEG, polyisobutylene-PEG, polycaprolactone-PEG (PCL-PEG), PLA-PEG, poly(methyl methacrylate)-PEG (PMMA-PEG), polydimethylsiloxane-co-PEG (PDMS-PEG), poly(vinylidene fluoride)-PEG (PVDF-PEG), PLURONIC™ surfactants (polypropylene oxide-co-polyethylene glycol), poly(tetramethylene glycol), hydroxy functional poly(vinyl pyrrolidone), biomolecules such as fibrin, fibrinogen, cellulose, starch, collagen, dextran, dextrin, hyaluronic acid, fragments and derivatives of hyaluronic acid, heparin, fragments and derivatives of heparin, glycosamino glycan (GAG), GAG derivatives, polysaccharide, elastin, chitosan, alginate, silicones, PolyActive™, and combinations thereof. In some embodiments, the substrate coating can exclude any one of the aforementioned polymers.

The term PolyActive™ refers to a block copolymer having flexible poly(ethylene glycol) and poly(butylene terephthalate) blocks (PEGT/PBT). PolyActive™ is intended to include AB, ABA, BAB copolymers having such segments of PEG and PBT (e.g., poly(ethylene glycol)-block-poly(butyleneterephthalate)-block poly(ethylene glycol) (PEG-PBT-PEG).

In a preferred embodiment, the biobeneficial material can be a polyether such as poly (ethylene glycol) (PEG) or polyalkylene oxide.

### Bioactive Agents

In some embodiments, the block copolymer described herein can be used, optionally with one or more bioactive agents, to form a coating on medical device. These bioactive agents can be any agent which is a therapeutic, prophylactic, or diagnostic agent. These agents can have anti-proliferative or anti-inflammatory properties or can have other properties such as antineoplastic, antiplatelet, anti-coagulant, anti-fibrin, antithrombotic, antimitotic, antibiotic, antiallergic, or antioxidant properties. Moreover, these agents can be cystostatic agents, agents that promote the healing of the endothelium, or agents that promote the attachment, migration and proliferation of endothelial cells while quenching smooth muscle cell proliferation. Examples of suitable therapeutic and prophylactic agents include synthetic inorganic and organic compounds, proteins and peptides, polysaccharides and other sugars, lipids, and DNA and RNA nucleic acid sequences having therapeutic, prophylactic or diagnostic activities. Nucleic acid sequences include genes, antisense molecules, which bind to complementary DNA to inhibit transcription, and ribozymes. Some other examples of bioactive agents include antibodies, receptor ligands, enzymes, adhesion peptides, blood clotting factors, inhibitors or clot dissolving agents, such as streptokinase and tissue plasminogen activator, antigens for immunization, hormones and growth factors, oligonucleotides such as antisense oligonucleotides and ribozymes and retroviral vectors for use in gene therapy. Examples of anti-proliferative agents include rapamycin and its functional or structural derivatives, 40-*O*-(2-hydroxy)ethyl-rapamycin (everolimus), and its functional or structural derivatives, paclitaxel and its functional and structural derivatives. Examples of rapamycin derivatives include ABT-578, 40-*O*-(3-hydroxy}propyl-rapamycin, 40-*O*-[2-(2-hydroxy)ethoxy]ethyl-rapamycin, and 40-*O*-tetrazole-rapamycin. Examples of paclitaxel derivatives include docetaxel. Examples of antineoplastics and/or antimitotics include methotrexate, azathioprine, vincristine, vinblastine, fluorouracil, doxorubicin hydrochloride (e.g. Adriamycin^{®} from Pharmacia & Upjohn, Peapack N.J.), and mitomycin (e.g. Mutamycin^{®} from Bristol-Myers Squibb Co., Stamford, Conn.). Examples of such antiplatelets, anticoagulants, antifibrin, and antithrombins include sodium heparin, low molecular weight heparins, heparinoids, hirudin, argatroban, forskolin, vapiprost, prostacyclin and prostacyclin analogues, dextran, D-phe-pro-arg-chloromethylketone (synthetic antithrombin), dipyridamole, glycoprotein IIb/IIIa platelet membrane receptor antagonist antibody, recombinant hirudin, thrombin inhibitors such as Angiomax (Biogen, Inc., Cambridge, Mass.), calcium channel blockers (such as nifedipine), colchicine, fibroblast growth factor (FGF) antagonists, fish oil (omega 3-fatty acid), histamine antagonists, lovastatin (an inhibitor of HMG-CoA reductase, a cholesterol lowering drug, brand name Mevacor^{®} from Merck & Co., Inc., Whitehouse Station, NJ), monoclonal antibodies (such as those specific for Platelet-Derived Growth Factor (PDGF) receptors), nitroprusside, phosphodiesterase inhibitors, prostaglandin inhibitors, suramin, serotonin blockers, steroids, thioprotease inhibitors, triazolopyrimidine (a PDGF antagonist), super oxide dismutases, super oxide dismutase mimetic, 4-amino-2,2,6,6-tetramethylpiperidine-1-oxyl (4-amino-TEMPO), estradiol, anticancer agents, dietary supplements such as various vitamins, and a combination thereof. Examples of anti-inflammatory agents including steroidal and non-steroidal anti-inflammatory agents include biolimus, tacrolimus, dexamethasone, clobetasol, corticosteroids or combinations thereof. Examples of such cytostatic substances include angiopeptin, angiotensin converting enzyme inhibitors such as captopril (e.g. Capoten^{®} and Capozide^{®} from Bristol-Myers Squibb Co., Stamford, Conn.), cilazapril or lisinopril (e.g. Prinivil^{®} and Prinzide^{®} from Merck & Co., Inc., Whitehouse Station, NJ). An example of an antiallergic agent is permirolast potassium. Other therapeutic substances or agents which may be appropriate include alpha-interferon, pimecrolimus, imatinib mesylate, midostaurin, and genetically engineered epithelial cells. The foregoing substances can also be used in the form of prodrugs or co-drugs thereof. The foregoing substances also include metabolites thereof and/or prodrugs of the metabolites. The foregoing substances are listed by way of example and are not meant to be limiting. Other active agents which are currently available or that may be developed in the future are equally applicable.

The dosage or concentration of the bioactive agent required to produce a favorable therapeutic effect should be less than the level at which the bioactive agent produces toxic effects and greater than the level at which non-therapeutic results are obtained. The dosage or concentration of the bioactive agent can depend upon factors such as the particular circumstances of the patient, the nature of the trauma, the nature of the therapy desired, the time over which the ingredient administered resides at the vascular site, and if other active agents are employed, the nature and type of the substance or combination of substances. Therapeutically effective dosages can be determined empirically, for example by infusing vessels from suitable animal model systems and using immunohistochemical, fluorescent or electron microscopy methods to detect the agent and its effects, or by conducting suitable in vitro studies. Standard pharmacological test procedures to determine dosages are understood by those of ordinary skill in the art.

### Examples of Implantable Device

As used herein, an implantable device can be any suitable medical substrate that can be implanted in a human or veterinary patient. Examples of such implantable devices include self-expandable stents, balloon-expandable stents, stent-grafts, grafts (e.g., aortic grafts), heart valve prosthesis (e.g., artificial heart valves) or vascular graft, cerebrospinal fluid shunts, pacemaker electrodes, catheters, endocardial leads (e.g., FINELINE and ENDOTAK, available from Guidant Corporation, Santa Clara, CA), and devices facilitating anastomosis such as anastomotic connectors. The underlying structure of the device can be of virtually any design. The device can include a metallic material or an alloy such as, but not limited to, cobalt chromium alloy (ELGILOY), stainless steel (316L), high nitrogen stainless steel, e.g., BIODUR 108, cobalt chrome alloy L-605, "MP35N," "MP20N," ELASTINITE (Nitinol), tantalum, nickel-titanium alloy, platinum-iridium alloy, gold, magnesium, or combinations thereof. "MP35N" and "MP20N" are trade names for alloys of cobalt, nickel, chromium and molybdenum available from Standard Press Steel Co., Jenkintown, PA. "MP35N" consists of 35% cobalt, 35% nickel, 20% chromium, and 10% molybdenum. "MP20N" consists of 50% cobalt, 20% nickel, 20% chromium, and 10% molybdenum. Devices made from bioabsorbable or biostable polymers could also be used with the embodiments of the present invention. The device can be, for example, a bioabsorbable stent.

### Method of Use

In accordance with embodiments of the invention, a medical device as used herein can be, e.g., a stent. For a device including one or more active agents, the agent will retain on the device such as a stent during delivery and expansion of the device, and released at a desired rate and for a predetermined duration of time at the site of implantation.

Preferably, the device is a stent. The stent described herein is useful for a variety of medical procedures, including, by way of example, treatment of obstructions caused by tumors in the bile ducts, esophagus, trachea/bronchi and other biological passageways. A stent having the above-described coating is particularly useful for treating occluded regions of blood vessels caused by abnormal or inappropriate migration and proliferation of smooth muscle cells, thrombosis, and restenosis. Stents may be placed in a wide array of blood vessels, both arteries and veins. Representative examples of sites include the iliac, renal, and coronary arteries.

For implantation of a stent, an angiogram is first performed to determine the appropriate positioning for stent therapy. An angiogram is typically accomplished by injecting a radiopaque contrasting agent through a catheter inserted into an artery or vein as an x-ray is taken. A guidewire is then advanced through the lesion or proposed site of treatment. Over the guidewire is passed a delivery catheter that allows a stent in its collapsed configuration to be inserted into the passageway. The delivery catheter is inserted either percutaneously or by surgery into the femoral artery, brachial artery, femoral vein, or brachial vein, and advanced into the appropriate blood vessel by steering the catheter through the vascular system under fluoroscopic guidance. A stent having the above-described coating may then be expanded at the desired area of treatment. A post-insertion angiogram may also be utilized to confirm appropriate positioning.

### Example

A series of random copolymers including units of a weight ratio of about 0 - 0.7 methyl methacrylate (MMA), about 0 - 0.9 methoxyethyl methacrylate (MOEMA), and about 0 - 0.2 hydroxyethyl methacrylate (HEMA) having a Mₙ in the range between about 80 kDa to about 250 kDa were spray-coated onto Vision Stents (3x18 mm) available from Guidant Corporation, Santa Clara, CA) by spray-coating from 2 wt% solutions of the copolymer and drug (D:P (ratio of drug:polymer) = 1:5; 1:3; 1:2) in acetone/dimethylformamide (DMF) (4:1). Scanning electronic microscope (SEM) of the coating before and after wet expansion showed good coating integrity in all cases. The best results were obtained with polymers containing a higher percentage of MOEMA and HEMA. These coatings were tested fro release rage, total convent and purity. The release rate in porcine serum was proportional to the MOEMA content, varying from 1 to 10% at the 3 day point after implantation.

## Claims

1. An implantable medical device comprising a coating comprising:
a random copolymer comprising units derived from:
(a) methyl methacrylate,
(b) methoxyethyl methacrylate, and
(c) 2-hydroxyethyl methacrylate;
wherein the methyl methacrylate is present in a weight ratio of the total monomers of up to 0.7, wherein the methoxyethyl methacrylate is present in a weight ratio of the total monomers of up to 0.9, and wherein the 2-hydroxylethyl methacrylate is present in a weight ratio of the total monomers of up to 0.2, and
wherein the coating further comprises a hydrophilic drug and/or hydrophobic drug, wherein the coating provides controlled release of the hydrophilic drug and/or the hydrophobic drug.

2. The implantable medical device according to claim 1, wherein the random copolymer has a number average molecular weight (Mₙ) in the range between 80 kDa and 250 kDa.

3. The implantable medical device of claim 1, wherein the hydrophobic drug is selected from the group consisting of paclitaxel, docetaxel, estradiol, 17-beta-estradiol, nitric oxide donors, super oxide dismutases, 4-amino-2,2,6,6-tetramethylpiperidine-1-oxyl (4-amino-TEMPO), tacrolimus, dexamethasone, rapamycin, 40-O-(2-hydroxy)ethyl-rapamycin (everolimus), 40-O-(3-hydroxy)ethyl-rapamycin, 40-O-[2-(2-hydroxy)ethoxy]ethyl-rapamycin, 40-O-tetrazole-rapamycin, 40-epi-(N1-tetrazole)rapamycin (ABT-578), γ-hirudin, clobetasol, mometasone, pimecrolimus, imatinib mesylate, midostaurain, and combinations of these.

4. The implantable medical device of claim 1, wherein the hydrophilic drug is a peptide or a drug carrying a charge.

5. The implantable medical device of claim 4, wherein the hydrophilic drug is RGD or cRGD.

6. The implantable medical device of claim 1, wherein the hydrophobic drug is everolimus.

7. The implantable medical device of claim 1, wherein the medical device is a stent.

8. The implantable medical device of claim 7, wherein the stent is bioabsorbable.

9. The implantable medical device of claim 1, further comprising a biocompatible polymer.

10. The implantable medical device of claim 1, further comprising a biobeneficial material.

11. An implantable medical device as defined in any of claims 1-10 for use to treat, prevent or ameliorate a medical condition selected from atherosclerosis, thrombosis, restenosis, hemorrhage, vascular dissection, vascular or performation, vascular aneurysm, vulnerable plaque, chronic total occlusion, claudication, anastomatic proliferation for vein and artificial grafts, bile duct obstruction, urethra obstruction, and tumor obstruction.

## Patentansprüche

1. Eine implantierbare medizinische Vorrichtung umfassend eine Beschichtung umfassend:
ein Random-Copolymer umfassend Einheiten, die von:
(a) Methylmethacrylat,
(b) Methoxyethylmethacrylat, und
(c) 2-Hydroxyethylmethacrylat;
abgeleitet sind;
wobei das Methylmethacrylat in einem Gewichtsverhältnis von den gesamten Monomeren von bis 0,7 anwesend ist, wobei das Methoxyethylmethacrylat in einem Gewichtsverhältnis von den gesamten Monomeren von bis 0,9 anwesend ist, und wobei das 2-Hydroxyethylmethacrylat in einem Gewichtsverhältnis von den gesamten Monomeren von bis 0,2 anwesend ist, und
wobei die Beschichtung weiterhin ein hydrophiles Arzneimittel und/oder ein hydrophobes Arzneimittel umfasst, wobei die Beschichtung kontrollierte Freisetzung des hydrophiles Arzneimittel und/oder des hydrophobes Arzneimittel ergibt.

2. Die implantierbare medizinische Vorrichtung nach Anspruch 1, wobei das Random-Copolymer ein Zahlenmittel des Molekulargewichts (Mₙ) im Bereich von zwischen 80 kDa und 250 kDa hat.

3. Die implantierbare medizinische Vorrichtung nach Anspruch 1, wobei das hydrophobe Arzneimittel ausgewählt ist aus der Gruppe bestehend aus Paclitaxel, Docetaxel, Estradiol, 17-Beta-Estradiol, Stickstoffmonoxiddonatoren, Superoxid-Dismutasen, 4-Amino-2,2,6,6-tetramethylpiperidin-1-oxyl (4-Amino-TEMPO), Tacrolimus, Dexamethason, Rapamycin, 40-O-(2-Hydroxy)ethyl-rapamycin (Everolimus), 40-O-(3-Hydroxy)ethyl-rapamycin, 40-O[2-(2-Hydroxy)ethoxy]ethyl-rapamycin, 40-O-Tetrazol-rapamycin, 40-Epi-(N1-tetrazol)-rapamycin (ABT-578), γ-Hirudin, Clobetasol, Mometason, Pimercolimus, Imatinibmesylat, Midostaurin, und Kombinationen davon.

4. Die implantierbare medizinische Vorrichtung des Anspruchs 1, wobei das hydrophile Arzneimittel ein Peptid ist oder ein Arzneimittel ist, welches eine Ladung trägt.

5. Die implantierbare medizinische Vorrichtung des Anspruchs 4, wobei das hydrophile Arzneimittel RGD oder cRGD ist.

6. Die implantierbare medizinische Vorrichtung des Anspruchs 1, wobei das hydrophobe Arzneimittel Everolimus ist.

7. Die implantierbare medizinische Vorrichtung des Anspruchs 1, wobei die medizinische Vorrichtung ein Stent ist.

8. Die implantierbare medizinische Vorrichtung des Anspruchs 7, wobei der Stent bioresorbierbar ist.

9. Die implantierbare medizinische Vorrichtung des Anspruchs 1, weiterhin umfassend ein biologisch kompatibles Polymer.

10. Die implantierbare medizinische Vorrichtung des Anspruchs 1, weiterhin umfassend ein biologisch nützliches Material.

11. Eine implantierbare medizinische Vorrichtung wie in einem der Ansprüche 1-10 definiert, zur Verwendung für die Behandlung, Prävention oder Besserung eines medizinischen Zustands, der ausgewählt ist aus Atherosklerose, Thrombose, Restenose, Hämorrhagie, Gefäßdissektion oder Gefäßperforation, Gefäßaneurysma, vulnerablen Plaques, chronischer Totalokklusion, Claudicatio, anastomothischer Profliferation für Venentransplantate und künstliche Transplantate, Gallengänge-Obstruktion, Obstruktion des Ureters und Obstruktion, die durch Tumoren verursacht wird.

## Revendications

1. Un dispositif médical implantable comprenant une couche comprenant:
un copolymère aléatoire comprenant des unités dérivées de :
(a) méthacrylate de méthyle,
(b) méthacrylate de méthoxyéthyle, et
(c) méthacrylate de 2-hydroxyéthyle ;
dans lequel le méthacrylate de méthyle est présent dans un rapport en poids du total des monomères allant jusqu'à 0,7, dans lequel le méthacrylate de méthoxyéthyle est présent dans un rapport en poids du total des monomères allant jusqu'à 0,9 et dans lequel le méthacrylate de 2-hydroxyéthyle est présent dans un rapport en poids du total des monomères allant jusqu'à 0,2, et
dans lequel la couche comprend en outre un médicament hydrophilique et/ou un médicament hydrophobique, dans lequel la couche fournit une libération contrôlée du médicament hydrophilique et/ou du médicament hydrophobique.

2. Le dispositif médical implantable selon la revendication 1, dans lequel le copolymère aléatoire a une masse moléculaire moyenne en nombre (Mₙ) dans l'intervalle compris entre 80 kDa et 250 kDa.

3. Le dispositif médical implantable de la revendication 1, dans lequel le médicament hydrophobique est choisi dans le groupe constitué du paclitaxel, du docétaxel, de l'estradiol, du 17-béta-estradiol, des donneurs d'oxyde nitrique, des superoxyde dismutases, du 4-amino-2,2,6,6-tétraméthylpipéridine-1-oxyle (4-amino-TEMPO), du tacrolimus, de la déxaméthasone, de la rapamycine, de la 40-O-(2-hydroxy)éthyl-rapamycine (évérolimus), de la 40-O-(3-hydroxy)éthyl-rapamycine, de la 40-O-[2-(2-hydroxy)éthoxy]-éthyl-rapamycine, de la 40-O-tétrazole-rapamycine, de la 40-epi-(N1-tétrazoi)rapamycine (ABT-578), de la γ-hirudine, du clobétasol, de la mométasone, du pimécrolimus, du mésylate d'imatinib, de la midostaurine et des combinaisons de ceux-ci.

4. Le dispositif médical implantable de la revendication 1, dans lequel le médicament hydrophilique est un peptide ou un médicament portant une charge.

5. Le dispositif médical implantable de la revendication 4, dans lequel le médicament hydrophilique est le RGD ou le cRGD.

6. Le dispositif médical implantable de la revendication 1, dans lequel le médicament hydrophobique est l'évérolimus.

7. Le dispositif médicale implantable de la revendication 1, dans lequel le dispositif médicale est une endoprothèse vasculaire.

8. Le dispositif médical implantable de la revendication 7, dans lequel l'endoprothèse vasculaire est biorésorbable.

9. Le dispositif médical implantable de la revendication 1, comprenant un polymère biocompatible.

10. Le dispositif médical implantable de la revendication 1, comprenant en outre un matériau biologiquement avantageux.

11. Un dispositif médical implantable tel que défini dans l'une quelconque des revendications 1-10 pour son utilisation pour traiter, prévenir ou améliorer une condition médicale choisie dans l'athérosclerose, la thrombose, la resténose, des hémorragies, la dissection ou perforation vasculaire, l'anévrysme vasculaire, la plaque vulnérable, l'occlusion totale chronique, la claudication, la prolifération anastomotique pour greffes veineuses et artificielles, l'obstruction du canal cholédoque, l'obstruction de l'uretère et l'obstruction tumorale.
